# EUROPÄISCHE PATENTSCHRIFT

(11) **EP 1 859 579 B1**
(45) Veröffentlichungstag und Bekanntmachung des Hinweises auf die Patenterteilung: **06.08.2008**
(21) Anmeldenummer: 06724944.1
(22) Anmeldetag: 06.03.2006
(51) Int. Cl.: H04L 12/42, H04L 12/28

(54) **OPTISCHES ÜBERTRAGUNGSSYSTEM**
OPTICAL TRANSMISSION SYSTEM
SYSTEME DE TRANSMISSION OPTIQUE

(30) Priorität: 08.03.2005 DE 102005010610
(43) Veröffentlichungstag der Anmeldung: 28.11.2007
(73) Patentinhaber: Nokia Siemens Networks GmbH & Co. KG, 81541 München (DE)
(72) Erfinder: NAGEL, Thomas, Boca Raton, Florida 33433 (US); BEER, Stephan, 91052 Erlangen (DE); DIRKMANN, Ansgar, 81375 München (DE)
(86) Internationale Anmeldenummer: PCT/EP2006/060481
(87) Internationale Veröffentlichungsnummer: WO 2006/094960

(56) Entgegenhaltungen:
- US-A1- 2003 002 776
- US-A1- 2003 228 093
- US-B1- 6 728 484

## Beschreibung

Die Erfindung betrifft ein optisches Übertragungssystem nach dem Oberbegriff des Anspruchs 1.

Bei optischen Netzen wird zwischen Weitverkehrsnetzen (Core-Netze), die nach den SONET- oder SDH-Empfehlungen ausgeführt sind, und Zugangs- oder Access-Netzen unterschieden. Die Access-Netze werden als so genannte Passive Optische Netze (PONs) ausgeführt, bei denen die Datenübertragung in einem ersten "Wellenlängenkanal" nach speziellen PON-Protokollen erfolgt. In "Downstream-Richtung" erfolgt die Übertragung im Zeitmultiplex-Broadcast-Mode von einer Zentrale, meist mit "Optical Line Terminal - OLT" bezeichnet, zu mehreren angeschlossenen optischen Netzterminals (ONU/ONT), die individuell adressiert sind. "Upstream" teilen sich die Netzterminals (ONU/ONT) einen zweiten Wellenlängenkanal, um ebenfalls im Zeitmultiplexbetrieb burst- oder zellenweise Daten zur Zentrale zu senden. Die Übertragungskapazität, als "bandwidth" bezeichnet, zwischen Zentrale und Netzterminal kann variiert werden. Die Nutzdaten, mit Payload bezeichnet, werden beispielsweise im "Asynchronus Transfer Mode" (ATM) oder aus Kostengründen nach den Ethernet-Empfehlungen übertragen. Der Hauptvorteil eines Ethernet PONs liegt in der Vermeidung von komplexen und daher teuren ATM- oder SONET-Elementen. Die Entwicklung dieser Netze ist in dem Aufsatz "Gigabit Ethernet Passive Optical Networks" von Gerry Pesavento Senior und Mark Kelsey, Alloptic Inc, Livermore, CA 94550 dargestellt.

In dem Patent US 2003/0002776 ist ein Übertragungssystem mit einem im Wellenlängen-Multiplexbetrieb betriebenen maschenförmigen Metro-Kernnetz beschrieben. An das Metrokernnetz sind bidirektionale Access-Verbindungen angeschlossen, welche im Gegensatz zu den üblichen PON-Netzen im Wellenlängen-Multiplexbetrieb arbeiten und daher einen entsprechenden Verbindungsaufwand benötigen.

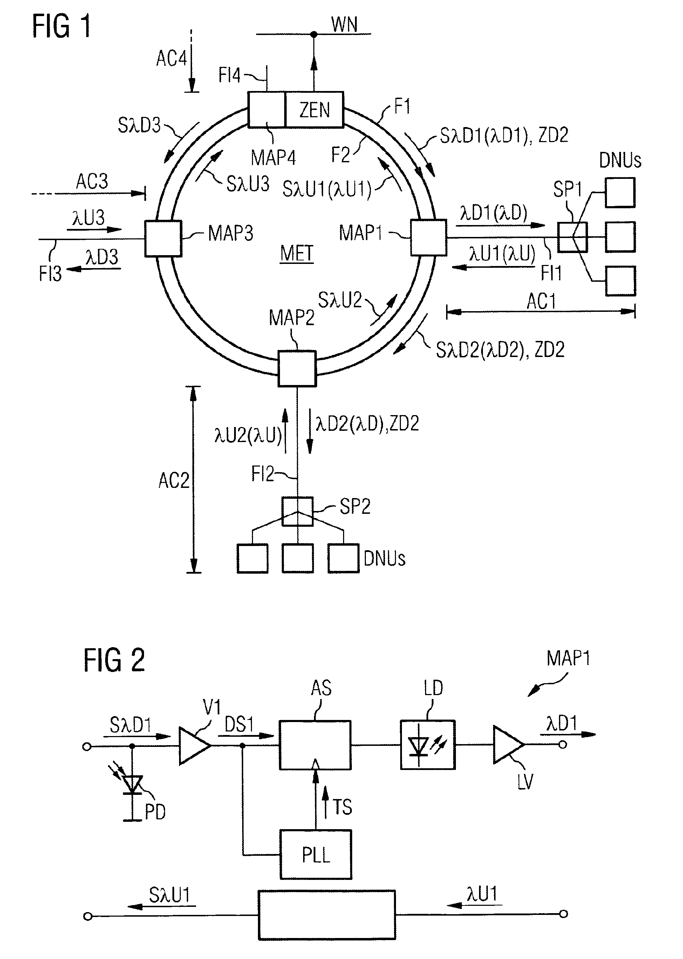

**Eine** Weiterentwicklung **der beschriebenen** Systeme für höhere Datenraten ist als GPON in den ITU-Empfehlungen G984 festgelegt. **Neuere als "Super PON" bezeichnete Entwicklungen** werden in IEEE Communications Magazine, Februar 2000, Seiten 74 bis 82 unter dem Titel "The SuperPON Demonstrator: An Exploration of Possible Evolution Path for Optical Access Networks" behandelt. Ziel der Entwicklung ist es, sowohl den Umfang dieser Access-Netze zu erweitern als auch die Anzahl der möglichen Teilnehmeranschlüsse zu vergrößern. Eine Vereinfachung wird dadurch erreicht, dass sogenannte Access-Nodes "Narrow Band Switches" aus dem Access-Bereich zum Core-Netzwerk verlagert werden (Figur 1, Figur 2). Der Access-Bereich weist aber nach wie vor aktive (amplified) Splitteranordnungen auf, um die optischen Netzterminals (ONT/ONO) mit ausreichender optischer Leistung zu versorgen.

Das hier beschriebene Netz weist also weiterhin folgende Nachteile auf: Im Access-Bereich sind nach wie vor optische Regeneratoren Optical Repeater Units (ORUs) erforderlich; die dort eingesetzten Regeneratoren sind als aktive Elemente zu warten. Die Reichweite ist für größere Netzstrukturen im Metrobereich zu gering und im rein passiven Bereich (in Figur 2 mit **"Drop (10 km)"** angegeben).

Aufgabe der Erfindung ist es daher, ein optisches Übertragungssystem mit großer Reichweite und einem einfachen Aufbau anzugeben.

Ein solches System ist im Anspruch 1 angegeben.

Vorteilhafte Weiterbildungen der Erfindung sind in den abhängigen Ansprüchen angegeben.

Bei diesem Übertragungssystem wird zwischen Metro-Bereich und Access-Bereich bzw. Metro-Kernnetz und Access-Verbindungen unterschieden. In den Schnittpunkten zwischen Metro-Bereich und Access-Bereich werden Metro-Anschlusseinrichtungen mit Regeneratoren und/oder Wellenlängen-Umsetzern eingesetzt. Diese enthalten Regeneratoren (Verstärker) für die Downstream- und Upstream-Richtung, wodurch die Reichweite durch zwischen einer Management- und Vermittlungszentrale und den Netzterminals wesentlich vergrößert.

Nur im Metro-Bereich bis zu den Metro-Anschlusseinrichtungen ist auch eine Stromversorgung erforderlich. Da nur in diesem Bereich aktive Komponenten vorhanden sind, beschränken sich Wartungsarbeiten praktisch ebenfalls auf diesen Bereich. Die Access-Verbindungen zwischen denn Metro-Anschlusspunkten und den optischen Netzterminals (ONUs/ONTs) sind dagegen rein passiv ausgeführt und brauchen daher praktisch keine Wartung.

Im Metro-Bereich erfolgt die Übertragung zweckmäßigerweise im Wellenlängen-Multiplexbetrieb, so dass erhebliche Datenmengen mehrerer Access-Verbindungen transportiert werden können. Die Management- und Vermittlungszentrale konzentriert die wesentlichen Einrichtungen in einem Punkt, so dass auch eine Erweiterung problemlos erfolgen kann. Die Überwachung erfolgt ebenfalls von dieser Zentrale aus.

Der Metro-Bereich wird vorzugsweise als Ringnetz ausgeführt, da so eine optimale Flächendeckung mit minimalem Aufwand erreicht wird. Die Betriebssicherheit kann durch einen Protektion-Ring mit einer zweiten Faser erheblich erhöht werden.

Auf allen Access-Verbindungen werden dieselben Wellenlängen für dieselben Dienste verwendet, so dass einheitliche optische Netzterminals verwendet werden können.

Aus Gründen des Aufwands erfolgt die Übertragung im Access-Bereich bidirektional über nur eine Faser, wobei zur Vermeidung von gegenseitigen Signalstörungen unterschiedliche Wellenlängen für jede Übertragungsrichtung verwendet werden. Darüber hinaus können über diese Faser mehrere unterschiedliche Dienste mit unterschiedlichen Wellenlängen übertragen werden.

Da das Netz einen größeren Umfang als bisherige Netze aufweist, regelt ein modifiziertes PON-Protokoll den Datenaustausch.

Ein Ausführungsbeispiel der Erfindung wird anhand von Figuren näher erläutert.

Es zeigen
- Figur 1: ein Prinzipschaltbild des Übertragungssystems,
- Figur 2: eine Metro-Anschlusseinrichtung und
- Figur 3: eine Variante des Übertragungssystems.

Das Übertragungssystem besteht aus einem Metro-Kernnetz MET mit einer Management- und Vermittlungszentrale ZEN und mehreren Access-Verbindungen zu optischen Netzterminals ONUs. Die Management- und Vermittlungszentrale ZEN kann funktionsmäßig etwa mit einem erweiterten optischen Line Terminal (OLT) verglichen werden. Eine Datenübertragung erfolgt bidirektional zwischen der Management- und Vermittlungszentrale ZEN und den Netzterminals ONUs nach einem PON-Protokoll.

Das Metro-Kernnetz MET ist in Figur 1 als bidirektionales Ringnetz mit zwei Fasern F1, F2 ausgeführt. Ebenso kann es als bidirektionales Ringnetz mit einer Faser oder als unidirektionales Ringnetz mit einer oder zwei Fasern ausgebildet sein. Es kann aber ebenso ein vermaschtes Netz sein.

Im Metronetz MET nach **Figur 1** werden Daten bidirektional zwischen der Management- und Vermittlungszentrale ZEN bis zu verschiedenen Metro-Anschlusseinrichtungen MAP1 bis MAP3 im Wellenlängenmultiplexbetrieb übertragen. Die Übertragung im Metro-Kernnetz kann hierbei bidirektional über eine Faser oder - beispielsweise für jede Übertragungsrichtung getrennt - über zwei Fasern erfolgen. Die Verwendung einer zweiten Faser trägt zur Erhöhung der Betriebssicherheit wesentlich bei, da im Störungsfall der Betrieb zwischen der Management- und Vermittlungszentrale ZEN und jeder der Metro-Anschlusseinrichtungen MAP1 - MAP4 durch bekannte Ersatzschaltungsverfahren aufrechterhalten werden kann.

Zwischen den Metro-Anschlusseinrichtungen MAP1 bis MAP3 des Metro-Kernnetzes MET und den optischen Netzterminals ONUs (Optical Network Units ONUs oder Optical Network Terminals ONTs) besteht jeweils eine rein passive optische "Access-Verbindung", über die die Daten ebenfalls bidirektional übertragen werden. Die erste Access-Verbindung AC1 ist durch einen an die die Metro-Anschlusseinrichtung MAP1 angeschalteten Access-Lichtwellenleiter FI1 und einen passiven Splitter SP1 realisiert, an dessen weitere Anschlüsse mehrere optische Netzterminals ONUs angeschaltet sind. Die weiteren Access-Verbindungen AC2 - AC4 sind entsprechend aufgebaut. Allerdings wird durch die Splitter SP1, SP2, ... die den jeweils angeschalteten Netzterminals ONUs zur Verfügung stehende Empfangsleistung entsprechend des Splittungsverhälnisses reduziert. Zurzeit wird ein Splittungsverhälnis von ca. 1:100 angestrebt, wodurch entsprechende leistungsstarke Laser bzw. Verstärker in den Metro-Anschußeinrichtungen vorgesehen und gegebenenfalls Maßnahmen gegen störende nichtlineare Effekte getroffen werden müssen. An die Netzterminals ONUs sind - meist nach optisch-elektrischer Wandlung - die Teilnehmergeräte angeschaltet.

Das Übertragungssystem ist so ausgelegt, dass die Access-Verbindungen AC1 - AC4 (in Figur 1 teilweise nur angedeutet) keine aktiven Elemente enthalten. Lediglich die Metro-Anschlusseinrichtungen MAPs und die Netzterminals ONUs benötigen aktive Elemente und damit elektrische Energie. Auch das übrige Übertragungssystem, das Metro-Kernnetz, ist vorzugsweise so ausgelegt, dass keine Verstärker zwischen den Metro-Anschlusseinrichtungen MAP und der Management- und Vermittlungszentrale ZEN benötigt werden. Auch hier ist natürlich eine Ersatzschaltung bei der Verwendung zweier Fasern möglich.

In Donwnstream-Richtung (von der Management- und Vermittlungszentrale ZEN über eine Metro-Anschlußsseinrichtung MAP zu den daran angeschalteten Netzterminals ONUs) erfolgt die Übertragung der Daten im Broadcast-Zeitmultiplexbetrieb nach den für passive optische Netze gültigen ITU-Empfehlungen bzw. nach modifizierten Empfehlungen jeweils in einem Downstream-Pulsrahmen. Dieses Multiplexsignal soll hier als ein Metro-Downstream-Signal bezeichnet werden. Von der Management- und Vermittlungszentrale ZEN werden über eine erste Faser F1 des Metro-Kernnetzes MET in der Regel mehrere Metro-Downstream-Signale SλD1, SλD2, SλD3, ... mit unterschiedlichen Wellenlängen λD1, λD2, λD3, ... (in Figur 1 in Klammern) zu den verschiedenen Metro-Anschlusseinrichtungen MAP1, MAP2, MAP3, MAP4 gesendet. Diese selektieren (droppen) jeweils die für die angeschaltete Access-Verbindung zugehörige "Wellenlänge" und setzen dann die Wellenlänge des selektierten Metro-Downstream-Signals in die für alle Access-Verbindungen gleiche Wellenlänge λD der Access-Downstream-Signale um. So wird das Metro-Downstream-Signal SλD1 in der ersten Metro-Anschlusseinrichtung MAP1 selektiert und in ein Access-Dowmstream-Signal λD₁ wellenlängenmäßig umgesetzt. Sonst bleiben die Signale unverändert, so dass sie als logisch transparente Signale direkt zwischen der zentralen Management- und Vermittlungszentrale ZEN und den optischen Netzterminals ONUs übertragen werden. Bei einer bezüglich der Kosten vorteilhaften Variante werden die Downstream-Signale lediglich verstärkt, ihre Wellenlängen jedoch beibehalten. Die einzelnen über Splitter angeschalteten breitbandigen Empfangsschaltungen der Netzterminals ONUs akzeptieren diese Wellenlängen. Sie werden über unterschiedliche Adressen angesprochen und selektieren die für sie bestimmte Information. Werden zusätzliche Dienste in einem anderen Wellenband übertragen, erfolgt eine wellenlängenmäßige Selektion für alle ONUs, die einerseits sämtliche Wellenlängen λD1, λD2, λD3, ... für den Betrieb zwischen der Management- und Vermittlungszentrale ZEN umfasst und andererseits die anderen Dienste.

In Upstream-Richtung erfolgt die Übertragung - nach einer vorhergehenden Synchronisation der optischen Netzterminals - im Zeitmultiplexbetrieb ebenfalls nach den für passive optische Netze gültigen ITU-Empfehlungen bzw. nach modifizierten ITU-Empfehlungen. Die von den Netzterminals ONUs in jeweils zugeordneten Zeitschlitzen ausgesendeten Datenblöcke oder Datenpakete werden - gegebenenfalls mit Sicherheitslücken versehen - zu einem TDM-Signal zusammengefasst und in einem Upstream-Pulsrahmens übertragen. Sie können außer der Payload (den eigentlich zu übertragenen Daten) noch zusätzliche Informationen bezüglich der Signalqualität, der erforderlichen Bandbreite, Routing-Information usw. enthalten. Die Zuweisung von Bandbreite bzw. Übertragungskapazität kann fest oder wahlweise dynamisch in Abhängigkeit von den Erfordernissen oder Prioritäten durch die Management- und Vermittlungszentrale erfolgen.

Die Metro-Downstream-Signale SλD1, SλD2, SλD3, ... können alle in Access-Downstream-Signale der gleichen Wellenlänge λD umgesetzt werden oder mit unveränderter Wellenlänge zu den ONUs übertragen werden. Sämtliche Access-Upstream-Signale λU1, λU2, λU3, ..., die mit der gleichen Wellenlänge λU auf den Access-Verbindungen übertragen werden, müssen dagegen in Metro-Upstream-Signale SλU1, SλU2, SλU3, ... mit unterschiedlichen Wellenlängen umgesetzt λU1, λU2, λU3, ... umgesetzt werden, die dann die über eine zweite Faser F2 des Metronetzes MET zur Management- und Vermittlungszentrale ZEN übertragen werden. Eine "logische" Umsetzung der Upstream-Signale erfolgt ebenfalls nicht, sie bleiben bis auf die Wellenlänge unverändert. Kurz zusammengefasst: Die Übertragung zwischen Management- und Vermittlungszentrale ZEN und den Netzterminals ONUs erfolgt direkt ohne logische Umsetzungen entsprechend dem verwendeten "PON"-Protokoll.

Die Management- und Vermittlungszentrale ZEN ist mit einem Weitverkehrsnetz WN oder/und mit anderen Metronetzen verbunden; über sie laufen alle Verbindungen, beispielsweise die Verbindungen zwischen zwei an unterschiedliche Access-Verbindungen AC1 und AC2 angeschaltete ONUs.

Über das Ringnetz und die Access-Verbindungen können mehrere unterschiedliche Arten von Signalen ZDλ (Zusatzdienste) im Wellenlängen-Multiplexbetrieb übertragen werden, von denen in Figur 1 nur eines ZDλ dargestellt ist. Darunter können auch Broadcast-Dienste sein. Statt einem beispielhaft angegebenen Access-Signal, z.B. λD₁, wird dann ein Bündel von unterschiedlichen Wellenlängen über die Access-Verbindung übertragen. Die unterschiedlichen Teilnehmergeräte werden dann über einen Wellenlängen-Demultiplexer an die Netzterminals ONUs angeschaltet.

Das optische Übertragungssystem ist für die Abdeckung größerer Regionen konzipiert, d.h. durch das Metronetz können ca. Entfernungen von 70 km und durch die Access-Verbindungen Entfernungen von weiteren ca. 30 km und mehr überbrückt werden. Hierzu sind in den Metro-Anschlusseinrichtungen MAP1, MAP2, MAP3 Regeneratoren vorzugsweise 3R-Regeneratoren vorgesehen, die die empfangenen Signale bezüglich Amplitude, Pulsform und Takt regenerieren. Beim heutigen Stand der Technik ist hierzu eingangseitig eine optisch-elektrische und ausgangsseitig elektrisch- optische Wandlung erforderlich. Eine bei der der Management- und Vermittlungszentrale ZEN angebrachte Metro-Anschlusseinrichtung kann entsprechen einfacher ausgeführt werden bzw. die Access-Verbindung AC4 kann direkt an die Management- und Vermittlungszentrale angeschaltet werden.

Die Wellenlängen-Umsetzerfunktion in den Metro-Anschlusseinrichtungen MAP wird in der Regel mit einer Verstärkungsfunktion kombiniert werden. **Figur 2** zeigt eine prinzipielle Ausführung einer Metro-Anschlusseinrichtung MAP mit optischelektrisch-optischer Umsetzung. Das empfangene optische Metro-Downstream-Signal, z.B. SλD1, wird durch eine Fotodiode PD in ein elektrisches Signal DS1 umgesetzt, das durch einen Empfangsverstärker V1 verstärkt wirkt. Eine Phasenregelschleife PLL dient zur Taktrückgewinnung. Mit dem regenerierten Taktsignal TS wird das elektrische Datensignal DS in einer Abtasteinrichtung AS abgetastet. Das abgetastete und somit taktmäßig regenerierte elektrische Datensignal moduliert eine die gewünschte neue Wellenlänge erzeugende Laserdiode LD. Das so generierte Downstream-Signal λD₁ wird über einen Leistungsverstärker LV ausgesendet. Abhängig von der Datenrate, der Übertragungsstrecke einschließlich Koppler und der Qualität von Sende- und Empfangseinrichtungen kann aus Kostengründen gegebenenfalls zumindest in Downstream-Richtung auf eine 3R-Regeneration verzichtet werden und lediglich eine Verstärkung vorgesehen sein.

Für die Upstrean-Richtung ist ebenfalls eine RegeneratorAnordnung vorhanden. In der Regel werden in Upstream-Richtung Burst-Signale empfangen, die unterschiedliche Pegel und unterschiedliche Bitphasen sowie Signalpausen aufweisen. Deshalb muss eine Regeneratoranordnung einschließlich des analogen Empfangsteils aufwändiger ausgeführt werden. Die Regeneratoren sollen die Datenbursts möglichst vollständig und fehlerfrei regenerieren. Die Datenregeneration kann auch hier mit (teilweise) optischen Regeneratoren durchgeführt werden, wobei zur Wellenlängen-Umsetzung auch nichtlineare Effekte genutzt werden können. Häufig wird eine 3R-Regeneration erforderlich sein. Zwischen Anschlusseinrichtung und Management- und Vermittlungszentrale ZEN kann auch in Upstream-Richtung ein von größeren Phasenschwankungen freier Punkt-zu-Punkt-Betrieb mit binären Signalen realisiert werden. Bei einer in der Nähe der Management- und Vermittlungszentrale ZEN angeordneten Metro-Anschlusseinrichtung MAP4 kann natürlich auf eine Regeneration verzichtet werden.

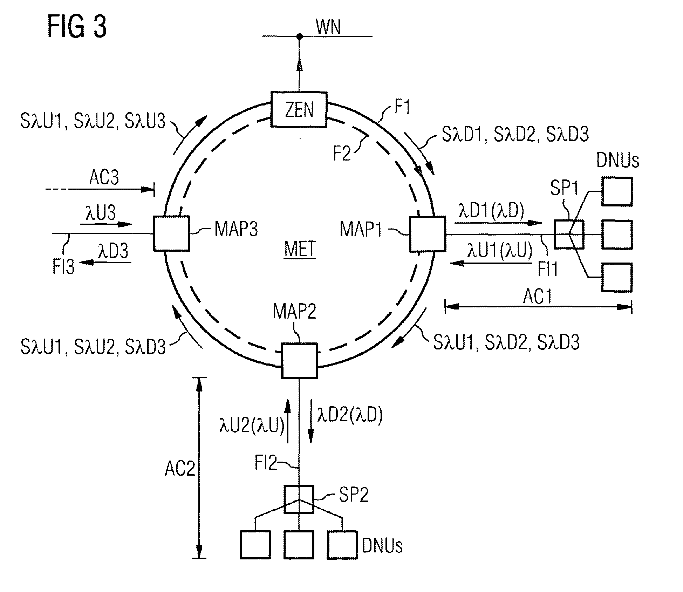

In **Figur 3** ist als alternative ein unidirektionales Ringnetz mit einer Faser F1 und mehreren Metro-Anschlusseinrichtungen MAP11 - Map 13 dargestellt, die zum unidirektionalen Aus- und Einkoppeln geeignet sind. Die Metro-Downstream-Signale SλD1, SλD2, SλD3, ... werden entsprechend ihrer Wellenlänge in den Metro-Anschlusseinrichtungen MAP11 - MAP13 selektiert, verstärkt und an die ONUs weitergesendet. In Upstream-Richtung werden die Burst-Signale λU1, λU2, λU3, .. wellenlängenmäßig in Metro-Upstream-Signale SλU1, SλU2, SλU3, .. jeweils mit derselben Wellenlänge wie die selektierten Metro-Downstream-Signale umgesetzt und in den Ring eingekoppelt. Die Realisierung erscheint zunächst einfacher als bei einem bidirektionalem Ring. Auch hier kann für Protection-Zwecke eine zweite Faser F2 (gestrichelt) vorgesehen sein oder die Faser F1 für Protection-Zwecke in beiden Richtungen betrieben werden.

### Bezugszeichen

- MET: Metro-Kernnetz
- F1: erste Faser
- F2: zweite Faser
- ZEN: Management- und Vermittlungszentrale (OLT)
- AC1, AC2, AC3: Access-Verbindung
- FI1, FI2, FI3: Access-Lichtwellenleiter
- MAP1, MAP2, MAP3: Metro-Anschlusseinrichtung
- ONU: optisches Netzterminal (auch ONT)
- SP: Splitter
- WN: Weitverkehrsnetz
- λD1: Access-Downstream-Signal (downstream)
- λU1: Access-Upstream-Signal (upstream)
- SDλ1, SDλ2, ...: Metro-Downstream-Signal
- SUλ2, SUλ2, ...: Metro-Upstream-Signal
- ZDλ: Zusatzsignal

## Patentansprüche

1. Optisches Übertragungssystem (SPON) mit einer zentralen Management- und Vermittlungsseinrichtung (ZEN),
mit einem im Wellenlängen-Multiplexbetrieb betriebenen ringförmigen Metro-Kernnetz (MET),
mit wellenlängenselektiven Metro-Anschlusseinrichtungen (MAP1, MAP2, ...), die Wellenlängenumsetzer und/oder Datenregeneratoren enthalten,
mit bidirektionalen passiven optischen Access-Verbindungen (AC1, AC2, ... ) zwischen den Metro-Anschlusseinrichtungen (MAP1, MAP2, ...) und jeweils über einen optischen Splitter (SP1, SP2, ...) angeschalteten optischen Netzterminals (ONUs), die adaptiert sind mittels eines Zeitmultiplexverfahrens für **Passive Optische Netze** logisch direkt mit der zentralen Management- und Vermittlungszentrale (ZEN) zu kommunizieren,
das adaptiert ist in den Metro-Anschlusseinrichtungen (MAP1, MAP2, ...) jeweils eines der Metro-Downstream-Signale zu selektieren, zu regenerieren und als Access-Downstream-Signal (λD1, λD2) auf einer Access-Verbindungen (AC1, AC2, ...) zwischen den Metro-Anschlusseinrichtungen (MAP1, MAP2, ...) einer Access-Verbindung (AC1, AC2, ...) zu den optischen Netzterminals (ONUs) zu übertragen,
das adaptiert ist über die Access-Verbindungen (AC1, AC2, ...) Access-Upstream-Signale (λU1, λU2) und mit gleichen oder innerhalb eines Übertragungsbandes wählbaren Wellenlängen (λU, λD) zu übertragen,
das adaptiert ist die Access-Upstream-Signale (λU1, λU2) in den Metro-Anschlusseinrichtungen (MAP1, MAP2, ...) zu regenerieren und wellenlängenmäßig in Metro-Upstream-Signale (SλU₁, SλU₂, ...) umzusetzen und im Metro-Kernnetz zu der Management- und Vermittlungsseinrichtung (ZEN) zu übertragen.

2. Optisches Übertragungssystem nach Anspruch 1,
**dadurch gekennzeichnet,**
**dass** das im Metro-Kernnetz (MET) als bidirektionales Ringnetz ausgeführt ist, in dem die Metro-Downstream-Signale (SλD₁, SλD2, ...) und die entsprechenden Metro-Upstream-Signale (SλU1, SλU2, ...) mit unterschiedlichen Wellenlängen (λD1, λD2, ...; λU1, λU2, ...) übertragen werden.

3. Optisches Übertragungssystem nach Anspruch 1,
**dadurch gekennzeichnet,**
**dass** das Metro-Kernnetz (MET) als unidirektionales Ringnetz ausgeführt ist, in dem die Metro-Downstream-Signale (SλD1, SλD2, ...) und die entsprechenden Metro-Upstream-Signale (SλU1, SλU2, ...) mit unterschiedlichen Wellenlängen (λD1, λD2, ...; λU1, λU2, ...) übertragen werden.

4. Optisches Übertragungssystem nach Anspruch 1,
**dadurch gekennzeichnet,**
**dass** das Metro-Kernnetz (MET) als ein oder zweifaseriges Ringnetz mit Protection-Funktion ausgebildet ist.

5. Optisches Übertragungssystem nach Anspruch 1,
**dadurch gekennzeichnet,**
**dass** auf den allen Access-Verbindungen (AC1, AC2, ...) zwischen den optischen Netzterminals (ONUs) und den Metro-Anschlusseinrichtungen (MAP1, MAP2, ...) Access-Upstream-Signale (λU1, λU2) und/oder Access-Downstream-Signale (λD1, λD1) mit einheitlichen Wellenlängen (λU, λD) übertragen werden

6. Optisches Übertragungssystem nach Anspruch 1,
**dadurch gekennzeichnet,**
**dass** die Metro-Anschlusseinrichtung (MAP1, MAP2, ...) Wellenlängenkonverter für mehrere unterschiedlichen Diensten (ZD) zugeordnete Signale aufweist, die im Metronetz (MET) über jeweils unterschiedliche Wellenlängen (Zλ1; Zλ2, ....) und über die Access-Verbindungen (AC1, AC2, ...) jeweils als Signale (λZD1, λZD2, ...) mit bei allen Access-Verbindungen (AC1, AC2, ...) gleichen Wellenlängen im Wellenlängenmultiplexbetrieb übertragen werden.

7. Optisches Übertragungssystem nach Anspruch 2,
**dadurch gekennzeichnet,**
**dass** eine Access-Verbindung zwischen einer Metro-Anschlusseinrichtung (MAP1) und einem Splitter (SP1) durch eine einzige Lichtleitfaser (FI1) realisiert wird, über die bidirektional Signale übertragen werden.

8. Optisches Übertragungssystem nach Anspruch 1,
**dadurch gekennzeichnet,**
**dass** das Metro-Kernnetz (MET) als Ringnetz oder als vermaschtes Netz ausgebildet ist und
**dass** Protection-Verbindungen innerhalb des Metronetzes zu den Metro-Anschlusseinrichtung (MAP) mit einer zweiten Lichtleitfaser (F2) schaltbar sind.

9. Optisches Übertragungssystem nach Anspruch 1,
**dadurch gekennzeichnet,**
**dass** die Management- und Vermittlungszentrale (ZEN) mit den Metro-Anschlusseinrichtungen (MAP1, MAP2, ...) über mindestens eine Faser (F1) ohne Zwischenverstärker direkt verbunden ist.

10. Optisches Übertragungssystem nach Anspruch 1,
**dadurch gekennzeichnet,**
**dass** die Access-Verbindungen (AC1, AC2, ...) zwischen Metro-Anschlusseinrichtungen (MAP1, MAP2, ...) und Netzterminals (ONUs) frei von elektrische Energie benötigenden aktiven Elementen ist.

## Claims

1. Optical transmission system (SPON) comprising a central management and switching device (ZEN),
with a ring-shaped Metro core network (MET) operated in wavelength division multiplex mode,
with wavelength-selective metro access points (MAP1, MAP2, ...) which contain wavelength converters and/or data regenerators,
with bidirectional passive optical access connections (AC1, AC2, ...) between the Metro access points (MAP1, MAP2, ...) and optical network units (ONUs) in each case connected via an optical splitter (SP1, SP2, ...) which are adapted to communicate logically directly with the central management and switching centre (ZEN) by means of a time division multiplex method for **passive optical networks**, which is adapted to select in each case one of the Metro downstream signals in the Metro access points (MAP1, MAP2, ...), to regenerate it and to transmit it as access downstream signal (λD1, λD2) on an access connection (AC1, AC2, ...) between the Metro access points (MAP1, MAP2, ...) of an access connection (AC1, AC2, ...) to the optical network units (ONUs),
which is adapted to transmit via the access connections (AC1, AC2, ...) access upstream signals (λU1, λU2) and with the same wavelengths (λU, λD), or wavelengths which can be selected within a transmission band,
that is adapted to regenerate the access upstream signals (λU1, λU2) in the Metro access points (MAP1, MAP2, ...) and to convert them in terms of wavelength into Metro upstream signals (SλU₁, SλU₂,...) and to transmit them in the Metro core network to the management and switching device (ZEN).

2. Optical transmission system according to Claim 1, **characterized in that** the Metro core network (MET) is arranged as bidirectional ring network in which the Metro downstream signals (SλD₁, SλD₂, ...) and the corresponding Metro upstream signals (SλU1, SλU2,...) are transmitted with different wavelengths (λD1, λD2, ...; λU1, λU2,...).

3. Optical transmission system according to Claim 1, **characterized in that** the Metro core network (MET) is arranged as unidirectional ring network in which the Metro downstream signals (SλD1, SλD2, ...) and the corresponding Metro upstream signals (SλU1, SλU2, ...) are transmitted with different wavelengths (λD1, λD2, ...; λU1, λU2, ...).

4. Optical transmission system according to Claim 1, **characterized in that** the Metro core network (MET) is arranged as single- or two-fibre ring network with protection function.

5. Optical transmission system according to Claim 1, **characterized in that** on all access connections (AC1, AC2, ...) between the optical network units (ONUs) and the Metro access points (MAP1, MAP2, ...), access upstream signals (λU1, λU2) and/or access downstream signals (λD1, λD2) are transmitted with uniform wavelengths (λU, λD).

6. Optical transmission system according to Claim 1, **characterized in that** the Metro access point (MAP1, MAP2, ...) has wavelength converters for a number of signals allocated to different services (ZD), which are transmitted via in each case different wavelengths (Zλ1; Zλ2, ...) in the Metro network (MET) and in each case as signals (λZD1, λZD2, ...) with wavelengths which are identical in all access connections (AC1, AC2, ...) via the access connections (AC1, AC2, ...) in wavelength division multiplex mode.

7. Optical transmission system according to Claim 2, **characterized in that** an access connection between a Metro access point (MAP1) and a splitter (SP1) is implemented by a single optical fibre (FI1) via which signals are transmitted bidirectionally.

8. Optical transmission system according to Claim 1, **characterized in that** the Metro core network (MET) is constructed as ring network or as meshed network and that protection connections within the Metro network to the Metro access point (MAP) can be switched by means of a second optical fibre (F2).

9. Optical transmission system according to Claim 1, **characterized in that** the management and switching centre (ZEN) is directly connected to the Metro access points (MAP1, MAP2, ...) via at least one fibre (F1) without repeater.

10. Optical transmission system according to Claim 1, **characterized in that** the access connections (AC1, AC2, ...) between Metro access points (MAP1, MAP2, ...) and network units (ONUs) are free of active elements requiring electrical energy.

## Revendications

1. Système de transmission optique (SPON) comprenant
un dispositif central de gestion et de commutation (ZEN),
un réseau central de métro (MET) de forme annulaire exploité dans le mode de multiplexage à répartition en longueurs d'onde,
des dispositifs de raccordement de métro (MAP1, MAP2, ...) sélectifs en longueurs d'onde, qui contiennent des convertisseurs de longueurs d'onde et/ou des régénérateurs de données,
des liaisons d'accès (AC1, AC2, ...) optiques, passives et bidirectionnelles entre les dispositifs de raccordement de métro (MAP1, MAP2, ...) et des terminaux de réseau optiques (ONUs) rattachés à chaque fois par un diviseur optique (SP1, SP2, ...), lesquels terminaux sont adaptés pour communiquer au moyen d'un procédé de multiplexage temporel pour des réseaux optiques passifs de façon logique directement avec le service central de gestion et de commutation (ZEN),
qui est adapté pour sélectionner et régénérer à chaque fois l'un des signaux de flux descendant de métro dans les dispositifs de raccordement de métro (MAP1, MAP2, ...), pour régénérer et transmettre sous forme de signal de flux descendant d'accès (λD1, λD2) sur une liaison d'accès (AC1, AC2, ...) entre les dispositifs de raccordement de métro (MAP1, MAP2, ...) d'une liaison d'accès (AC1, AC2,...) et les terminaux de réseau optiques (ONUs),
qui est adapté pour transmettre par les liaisons d'accès (AC1, AC2, ...) des signaux de flux ascendant d'accès (λU1, λU2) et avec des longueurs d'onde (λU, λD) identiques ou pouvant être choisies à l'intérieur d'une bande de transmission,
qui est adapté pour régénérer les signaux de flux ascendant d'accès (λU1, λU2) dans les dispositifs de raccordement de métro (MAP1, MAP2,...) et les convertir au niveau des longueurs d'onde en signaux de flux ascendant de métro (SλU1, SλU2, ...) et les transmettre dans le réseau principal de métro au dispositif de gestion et de commutation (ZEN).

2. Système de transmission optique selon la revendication 1,
**caractérisé en ce que**
le réseau principal de métro (MET) est réalisé sous forme de réseau annulaire bidirectionnel, dans lequel les signaux de flux descendant de métro (SλD1, SλD2, ...) et les signaux de flux ascendant de métro (SλU1, SλU2,...) correspondants sont transmis avec différentes longueurs d'onde (λD1, λD2, ... ; λU1, λU2, ...).

3. Système de transmission optique selon la revendication 1,
**caractérisé en ce que**
le réseau central de métro (MET) est conçu comme réseau annulaire unidirectionnel, dans lequel les signaux de flux descendant de métro (SλD1, SλD2,...) et les signaux de flux ascendant de métro (SλU1, SλU2, ...) correspondants sont transmis avec différentes longueurs d'onde (λD1, λD2, ... ; λU1, λU2,...).

4. Système de transmission optique selon la revendication 1,
**caractérisé en ce que**
le réseau central de métro (MET) est conçu comme un réseau annulaire à une fibre ou deux fibres avec une fonction de protection.

5. Système de transmission optique selon la revendication 1, **caractérisé en ce que** des signaux de flux ascendant d'accès (λU1, λU2) et/ou des signaux de flux descendant d'accès (λD1, λD2) avec des longueurs d'onde homogènes (λU, λD) sont transmis sur toutes les liaisons d'accès (AC1, AC2, ...) entre les terminaux de réseau optiques (ONUs) et les dispositifs de raccordement de métro (MAP1, MAP2, ...).

6. Transmission optique selon la revendication 1,
**caractérisé en ce que**
le dispositif de raccordement de métro (MAP1, MAP2,...) présente des convertisseurs de longueurs d'onde pour plusieurs signaux attribués à différents services (ZD), qui sont transmis dans le réseau de métro (MET) par respectivement différentes longueurs d'onde (Zλ1 ; Zλ2, ...) et par des liaisons d'accès (AC1, AC2, ...) à chaque fois sous forme de signaux (λZD1, λZD2, ...) avec des longueurs d'onde identiques pour toutes les liaisons d'accès (AC1, AC2, ...) dans le mode multiplex avec répartition en longueurs d'onde.

7. Système de transmission optique selon la revendication 2,
**caractérisé en ce que**
une liaison d'accès est réalisée entre un dispositif de raccordement de métro (MAP1) et un diviseur (SP1) par une unique fibre optique (FI1), par laquelle des signaux sont transmis de façon bidirectionnelle.

8. Système de transmission optique selon la revendication 1,
**caractérisé en ce que**
le réseau principal de métro (MET) est conçu sous forme de réseau annulaire ou sous forme de réseau maillé et
**en ce que** des liaisons de protection doivent être commutées à l'intérieur du réseau de métro avec le dispositif de raccordement de métro (MAP) avec une seconde fibre optique (F2).

9. Système de transmission optique selon la revendication 1,
**caractérisé en ce que**
le central de gestion et de commutation (ZEN) est relié directement aux dispositifs de raccordement de métro (MAP1, MAP2, ...) par au moins une fibre (F1) sans amplificateur intermédiaire.

10. Système de transmission optique selon la revendication 1,
**caractérisé en ce que**
les liaisons d'accès (AC1, AC2, ...) entre des dispositifs de raccordement de métro (MAP1, MAP2, ...) et des terminaux de réseau (ONUs) sont exemptes d'éléments actifs nécessitant de l'énergie électrique.
